# FASCICULE DE BREVET EUROPEEN

(11) **EP 1 056 969 B1**
(45) Date de publication et mention de la délivrance du brevet: **21.01.2004**
(21) Numéro de dépôt: 99903786.4
(22) Date de dépôt: 19.02.1999
(51) Int. Cl.: F16L 37/084

(54) **RACCORD ENCLIQUETABLE POUR CONDUIT DE FLUIDE**
RASTVERBINDUNG FÜR EINE ROHRLEITUNG
SNAP-ON CONNECTION FOR FLUID CONDUIT

(30) Priorité: 27.02.1998 FR 9802392; 02.11.1998 FR 9813740
(43) Date de publication de la demande: 06.12.2000
(73) Titulaire: HUTCHINSON, 75008 Paris (FR)
(72) Inventeur: GODEAU, Denis, F-45260 Vieilles Maisons/Joudry (FR); EXANDIER, Philippe, F-45700 Panne (FR)
(74) Mandataire: Doireau, Marc
(86) Numéro de dépôt international: PCT/FR1999/000375
(87) Numéro de publication internationale: WO 1999/043977

(56) Documents cités:
- EP-A- 0 724 108
- DE-C- 4 310 795
- GB-A- 2 235 267
- US-A- 3 990 727
- US-A- 5 161 830

## Description

L'invention concerne un perfectionnement à un raccord encliquetable pour conduit de fluide, en particulier pour véhicule automobile, ce raccord étant notamment destiné à des conduits de fluide sous pression relativement élevée, tels par exemple que des conduits d'un circuit de conditionnement d'air.

On connaît du document EP - 0 724108 un raccord encliquetable avec un organe de verrouillage constitué par une épingle qui est insérée dans une douille pour venir se bloquer sur une saillie périphérique d'un embout au travers de deux ouvertures qui sont ménagées dans la douille.

Les raccords pour conduits comprennent, le plus souvent, une douille métallique fixée, par exemple par sertissage, sur l'extrémité du conduit et destinée à s'engager sur un embout tubulaire d'un élément du circuit précité, la douille assurant l'étanchéité au fluide avec le conduit et avec l'embout. Un organe cylindrique de verrouillage entoure la douille et l'embout et coopère avec eux par accrochage et/ou encliquetage pour s'opposer à leur séparation et maintenir la connexion entre le conduit et l'embout.

Ce type de raccord doit être fiable et en même temps aussi simple et peu coûteux que possible. Il est en outre demandé ou souhaité qu'il soit facile et rapide à assembler et qu'il permette une déconnexion du conduit et de l'embout par une manoeuvre rapide exécutable d'une main sans outil.

L'invention a notamment pour but de répondre à ce besoin, grâce à un raccord encliquetable satisfaisant aux conditions citées plus haut.

Elle propose à cet effet un raccord comprenant une douille cylindrique montée fixement sur une extrémité d'un conduit à raccorder sur un embout tubulaire qui est destiné à être introduit dans la douille et qui comporte une saillie périphérique au voisinage de son extrémité libre, et un organe cylindrique de verrouillage rapporté autour de la douille et destiné à coopérer avec une partie de la douille et avec la saillie périphérique de l'embout pour maintenir l'embout engagé dans la douille,

l'organe de verrouillage comprenant au moins une fente longitudinale et est formé avec deux pattes latérales agencées respectivement d'un côté et de l'autre de la fente pour permettre par poussée sur les pattes dans deux directions opposées, d'ouvrir l'organe de verrouillage pour la déconnexion du conduit et de l'embout, caractérisé en ce que l'organe de verrouillage comprend, à l'une de ses extrémités, une partie cylindrique dont le bord intérieur est rabattu radialement vers l'organe de verrouillage en au moins deux points de sa périphérie pour former des pattes de verrouillage.

La fente longitudinale de l'organe de verrouillage permet, d'une part, de le monter facilement sur la douille ou sur l'embout et, d'autre part, de l'ouvrir au moyen d'une seule main lorsque l'on veut déconnecter le conduit de l'embout.

Dans une forme de réalisation de l'organe de verrouillage, les pattes latérales précitées sont formées à une extrémité de l'organe de verrouillage et sont voisines l'une de l'autre.

Dans une autre forme de réalisation de l'invention, l'organe de verrouillage comprend deux fentes longitudinales diamétralement opposées, et les deux pattes latérales précitées sont diamétralement opposées et situées d'un côté et de l'autre respectivement d'un plan axial passant par les deux tentes.

Dans un cas comme dans l'autre, il suffit d'exercer avec deux doigts un couple sur les deux pattes latérales pour ouvrir l'organe de verrouillage et permettre la déconnexion du conduit et de l'embout.

L'organe de verrouillage peut être réalisé en une seule pièce, ou être formé de deux pièces semi-cylindriques, qui sont emboîtées et montées l'une sur l'autre et/ou sur la douille précitée par serrage élastique ou par encliquetage.

Cet organe de verrouillage peut être réalisé en matière plastique ou en métal.

Il est de préférence monté sur la douille et coopère par encliquetage avec l'embout.

D'une manière générale, la partie de la douille avec laquelle coopère l'organe de verrouillage est constituée par au moins un épaulement ou un décrochement périphérique de la douille selon un premier mode de réalisation du raccord, ou par au moins une saillie située à la périphérie de la douille et vers son extrémité adjacente à l'embout tubulaire selon un second mode de réalisation de l'invention.

Ce second mode de réalisation présente l'avantage de supprimer l'angle vif nécessaire pour réaliser l'épaulement de la douille, et permet de diminuer la longueur axiale de l'organe de verrouillage.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- les figures 1 et 2 sont des vues de face et de dessus respectivement d'un raccord selon un premier mode de réalisation de l'invention,
- la figure 3 est une vue en coupe axiale selon la ligne III-III de la figure 2,
- la figure 4 est une vue en coupe axiale selon la ligne IV-IV de la figure 3,
- la figure 5 est une vue en coupe axiale d'une variante du premier mode de réalisation du raccord selon l'invention,
- la figure 6 est une vue schématique en perspective de l'organe de verrouillage des raccords représentés aux figures 1 à 5,
- les figures 7 et 8 sont des vues schématiques en perspective de deux variantes de réalisation de cet organe de verrouillage,
- la figure 9 est une vue schématique en perspective représentant une partie de l'organe de verrouillage de la figure 8 montée en place sur un raccord,
- la figure 10 est une vue schématique en perspective représentant les deux parties de l'organe de verrouillage de la figure 8 montées en place sur un raccord,
- la figure 11 est une vue en coupe axiale d'un second mode de réalisation d'un raccord selon l'invention,
- la figure 12 est une vue en perspective de la douille du raccord de la figure 11,
- la figure 13 est une vue en coupe axiale du sous-ensemble douille-dispostitif d'étanchéité du raccord de la figure 11,
- les figures 14 et 15 sont des vues en perspective des deux pièces formant l'organe de verrouillage du raccord de la figure 11,
- la figure 16 est une vue en perspective du raccord de la figure 11,
- les figures 17 et 18 sont des vues en perspective d'une variante en une seule pièce de l'organe de verrouillage des figures 14 et 15,
- les figures 19 et 20 sont des vues en perspective d'une autre variante en une seule pièce de l'organe de verrouillage des figures 14 et 15,
- la figure 21 est une vue en perspective partielle du raccord de la figure 11 comprenant l'organe de verrouillage des figures 19 et 20,
- la figure 22 est une vue en perspective partielle du raccord de la figure 11 avec une autre variante de l'organe de verrouillage des figures 18 et 19,
- les figures 23 et 24 représentent schématiquement et partiellement des variantes possibles au niveau de la douille du raccord de la figure 11, et
- la figure 25 est une vue en perspective pour illustrer une autre forme de réalisation de l'organe de verrouillage,
- la figure 26 est une vue en coupe axiale de la douille et de l'organe de verrouillage de figure 25, une fois ces deux éléments assemblés l'un à l'autre,
- les figures 27 et 28 sont des vues en perspective pour illustrer encore une autre forme de réalisation de la douille et de l'organe de verrouillage, respectivement, et
- la figure 29 est une vue en coupe axiale de la douille et de l'organe de verrouillage des figures 27 et 28, une fois ces deux éléments assemblés l'un à l'autre.

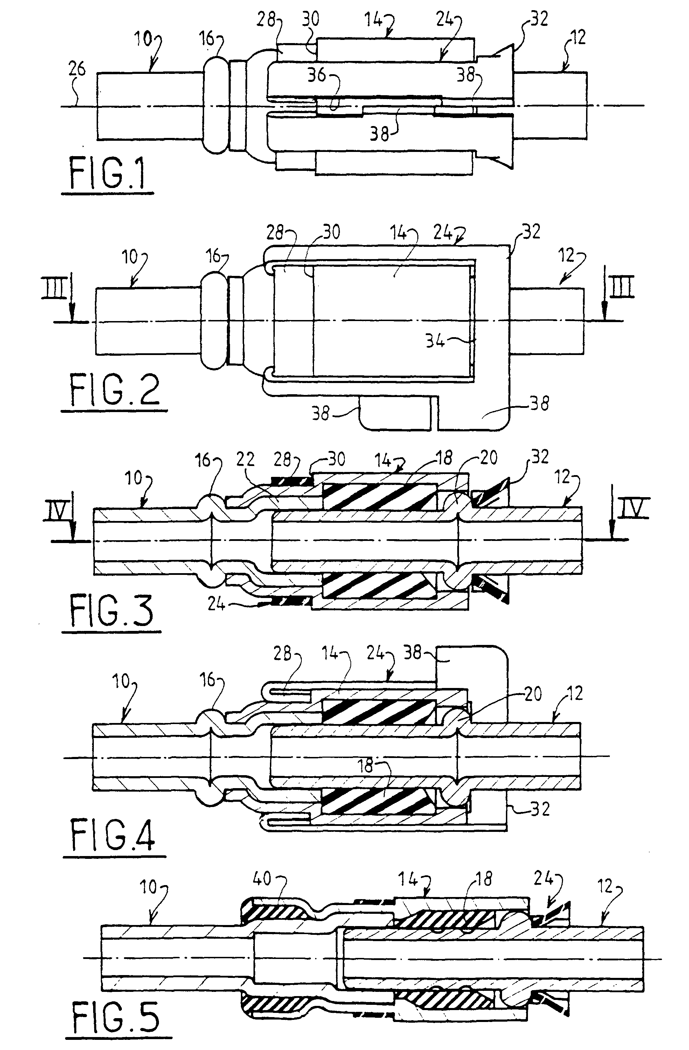

On se réfère d'abord aux figures 1 à 4 qui représentent un premier mode de réalisation d'un raccord selon l'invention, destiné à la connexion d'un conduit 10 et d'un embout tubulaire 12 qui sont formés tous les deux de tubes rigides, par exemple métalliques, pour la circulation d'un fluide à pression relativement élevée, par exemple dans un circuit de conditionnement d'air pour véhicule automobile.

Le raccord selon l'invention comprend une douille métallique 14 de forme générale cylindrique, qui est sertie sur l'extrémité du conduit 10, celle-ci étant formée avec un bourrelet périphérique 16 qui sert de butée d'appui et de positionnement d'une extrémité de la douille 14.

L'autre extrémité de la douille 14 s'étend au-delà de l'extrémité du conduit 10 et comporte un joint d'étanchéité 18 surmoulé sur sa face intérieure.

L'embout 12 comporte un bourrelet périphérique 20 dont le diamètre extérieur est légèrement inférieur au diamètre interne de l'extrémité libre de la douille 14 dans l'exemple de réalisation représenté, ce bourrelet 20 se trouvant à une certaine distance de l'extrémité libre de l'embout 12 de façon à ce que cette extrémité libre puisse être introduite non seulement à l'intérieur de la douille 14, mais aussi à l'intérieur de l'extrémité libre élargie 22 du conduit 10 comme représenté aux figures 3 et 4 quand le bourrelet 20 est à l'intérieur de la douille 14.

Dans cette position, l'étanchéité au fluide est assurée par le joint d'étanchéité 18 de la douille 14, qui s'applique sur la surface périphérique extérieure de l'embout 12, la surface cylindrique interne du joint 18 pouvant être formée, de façon classique, avec des nervures ou lèvres annulaires d'étanchéité qui forment plusieurs lignes d'étanchéité successives sur l'extrémité de l'embout 12.

Dans la position de connexion représentée aux figures 3 et 4, l'embout 12 est guidé par la partie élargie 22 du conduit 10 et par l'extrémité libre de la douille 14 dans laquelle vient se placer le bourrelet périphérique 20 de l'embout 12, en empêchant ainsi tout débattement transversal de l'embout 12 à l'intérieur de la douille 14 et du conduit 10.

Le raccord selon l'invention comprend également un organe de verrouillage 24 qui entoure la douille 14 et l'embout 12 et qui est monté sur la douille 14 avec un jeu faible en translation dans le sens axial et en rotation autour de leur axe longitudinal commun 26, une extrémité 28 de l'organe 24 venant s'appliquer sur une butée périphérique 30 de la douille 14 dans le sens empêchant l'organe 24 de se déplacer vers l'embout 12, l'autre extrémité 32 de l'organe de verrouillage 24 étant conformée pour s'engager par encliquetage élastique derrière le bourrelet périphérique 20 de l'embout 12, comme représenté en figure 3.

Cette extrémité 32 est de forme annulaire cylindrique et son bord périphérique intérieur 34 est rabattu radialement vers l'axe 26 en au moins deux points diamétralement opposés de sa périphérie, pour former des pattes d'encliquetage élastique qui sont radialement déformables vers l'extérieur par le bourrelet 20 lorsque l'embout 12 est introduit dans la douille 14 et le conduit 10 et qui reprennent leur position initiale de verrouillage en butée sur le bourrelet 20 dès que celui-ci est engagé dans la douille 14 et a libéré lesdites pattes.

Dans cette position (représentée en figure 3), la connexion entre le conduit 10 et l'embout 12 est maintenue de façon positive par l'organe de verrouillage 24. Cet organe comprend au moins une et de préférence deux fentes longitudinales 36 diamétralement opposées qui s'étendent sur la plus grande partie de sa longueur entre son extrémité 32 dépassant de la douille 14 et le voisinage de son extrémité opposée 28, l'une de ces deux fentes pouvant s'étendre sur toute la longueur de l'organe de verrouillage 34 pour permettre son ouverture par déformation élastique et faciliter son montage sur la douille 14.

Deux pattes latérales 38 sont formées sur l'organe de verrouillage 24 de part et d'autre de cette fente longitudinale 36, au voisinage de l'extrémité 32. Ces pattes latérales s'étendent radialement par rapport à l'axe longitudinal de l'organe 24 et sont décalées l'une par rapport à l'autre le long de cet axe en restant voisines ou sensiblement adjacentes.

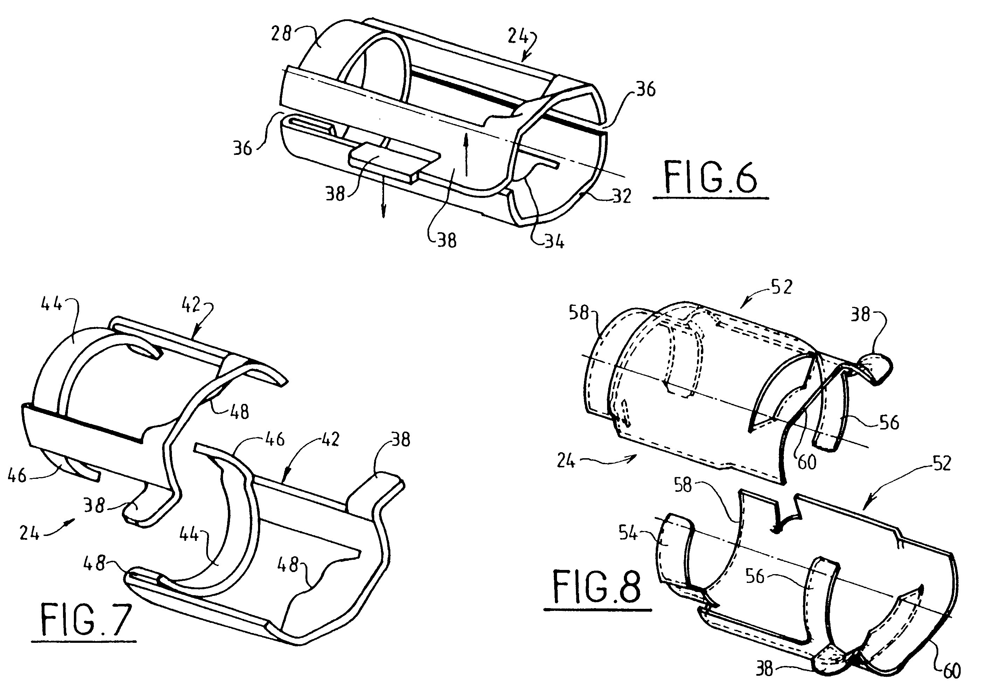

Par poussée sur les deux pattes 38 dans deux directions opposées comme représenté par les flèches en figure 6, ce qu'il est possible de faire sans outil spécial à l'aide du pouce et de l'index, on peut ouvrir l'extrémité 32 de l'organe de verrouillage 24, suffisamment pour dégager les pattes d'encliquetage 34 du bourrelet 20 de l'embout 12 et déconnecter ce dernier du conduit 10.

Dans la variante représentée en coupe axiale en figure 5, l'organe de verrouillage 24 est identique à celui des figures 1 à 4 et 6, et la douille 14 diffère de celle représentée aux figures 1 à 4 en ce qu'elle comprend un joint d'étanchéité 40 surmoulé à l'intérieur de son extrémité entourant le conduit 10. On réalise ainsi une double étanchéité entre la douille 14 et le conduit 10 et entre la douille 14 et l'embout 12.

Les deux pattes latérales 38 sont sensiblement dans un même plan dans le mode de réalisation des figures 1 à 6. En variante, elles peuvent être dans des plans différents. Dans ce cas, le déverrouillage de l'organe 24 peut être obtenu, selon les cas, en rapprochant les deux pattes 38 l'une de l'autre ou, au contraire, en les écartant l'une de l'autre.

L'organe de verrouillage 24 qui est monobloc dans la forme de réalisation représentée aux figures 1 à 6, peut être réalisé en deux pièces semi-cylindriques 42 comme représenté schématiquement en figure 7.

De préférence, les deux pièces 42 sont identiques et comprennent des moyens de fixation l'une à l'autre par agrafage ou encliquetage élastique.

A cet effet, l'extrémité semi-annulaire 44 de chaque pièce 42, située du côté du conduit 10, est prolongée par une patte 46 d'un côté et comprend un logement 48 de l'autre côté pour la réception de la patte 44 de l'autre pièce 42. L'extrémité de chaque pièce 42 située du côté de l'embout 12 est de forme semi-annulaire et comporte un bord intérieur rabattu 48 formant patte d'encliquetage sur le bourrelet 20 de l'embout 12.

Au montage, il suffit de disposer les deux pièces 42 de part et d'autre de la douille 14 et d'introduire les pattes 46 dans les logements 48 correspondants, pour solidariser les deux pièces 42 l'une à l'autre et former l'organe de verrouillage 24.

Chaque pièce 42 est formée avec une patte latérale 38 du type précité, de sorte que l'organe de verrouillage 24 à l'état assemblé comporte deux pattes latérales 38 qui sont diamétralement opposées. Il est toujours possible d'exercer, avec le pouce et l'index, un couple sur les deux pattes 38 pour provoquer l'ouverture de cette extrémité de l'organe de verrouillage 24 et permettre la déconnexion de l'embout 12 et du conduit 10.

Dans la variante de réalisation de la figure 8, l'organe de verrouillage 24 est formé de deux pièces 52 identiques qui présentent les mêmes caractéristiques que les pièces 42 de la figure 7, et qui sont chacune de forme semi-cyclindrique sur toute leur longueur et ne sont pas ajourées entre leurs extrémités.

De plus, des pattes de fixation ou d'encliquetage élastique 54, 56 sont formées à chaque extrémité 58, 60 des pièces 52, qui comportent également chacune une patte latérale 38 du type précité à leur extrémité 52 située du côté de l'embout 12.

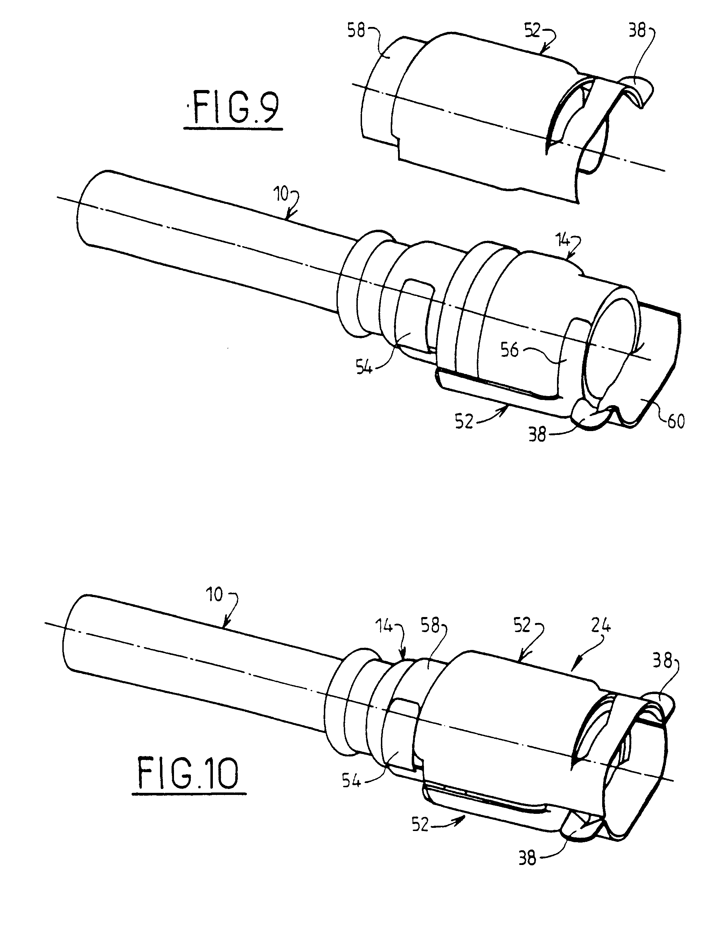

Le montage des pièces 52 sur une douille 14 est représenté schématique aux figures 9 et 10.

En figure 9, une pièce (inférieure) 52 a été montée sur la douille 14 sertie sur l'extrémité du conduit 10 et l'autre pièce (supérieure) 52 est positionnée au-dessus de la douille 14, prête à être montée sur cette douille et sur la pièce inférieure 52.

La patte (arrière) 54 de la pièce inférieure 52 entoure avec un jeu faible une partie cylindrique (arrière) de la douille 14, tandis que l'autre patte de fixation 56 de cette partie inférieure 52 est appliquée élastiquement sur une partie cylindrique de l'autre extrémité (avant) de la douille 14.

Lorsque la pièce supérieure 52 est posée sur la douille 14 comme représenté en figure 10, son extrémité avant 60 vient recouvrir la patte de fixation 56 de la pièce inférieure 52, tandis que l'extrémité arrière 58 de la pièce supérieure 52 est engagée entre la douille 14 et la patte de fixation 54 de la pièce inférieure 52 et est maintenue par cette patte élastique 54.

Dans la position de la figure 10, l'organe de verrouillage 44 est monté et fixé sur la douille 14 et est prêt à verrouiller par encliquetage un embout 12 introduit dans la douille 14 et dans l'extrémité du conduit 10.

Comme précédemment, un couple exercé au moyen du pouce et de l'index sur les pattes latérales 38 permet d'ouvrir l'extrémité avant de l'organe de verrouillage 24 pour la déconnexion du conduit 10 et de l'embout 12.

Un avantage particulièrement intéressant du raccord selon l'invention est que l'organe de verrouillage 24 n'est pas fixe en rotation sur la douille 14 et l'embout 12 et peut être amené à volonté dans la position angulaire autour de son axe longitudinal la plus appropriée à sa manoeuvre.

L'organe de verrouillage 24 est réalisable en toute matière appropriée, notamment en matière plastique ou en métal. Bien qu'il soit monté sur la douille 14 dans le mode de réalisation préféré de l'invention, il pourrait également être monté sur l'embout 12 pour être verrouillé par encliquetage élastique sur la douille 14.

On se réfère maintenant aux figures il à 16 qui représentent un second mode de réalisation d'un raccord selon l'invention. Par rapport au premier mode de réalisation, le raccord présente notamment des perfectionnements au niveau de la douille 114, du dispositif d'étanchéité 118 et de l'organe de verrouillage 124.

D'une manière générale, l'organe de verrouillage 124 est rapporté sur la douille 114 par déformation élastique dudit organe 124, et on prévoit des moyens d'assemblage entre la douille 114 et l'organe de verrouillage 124 pour immobiliser ce dernier sur la douille 114.

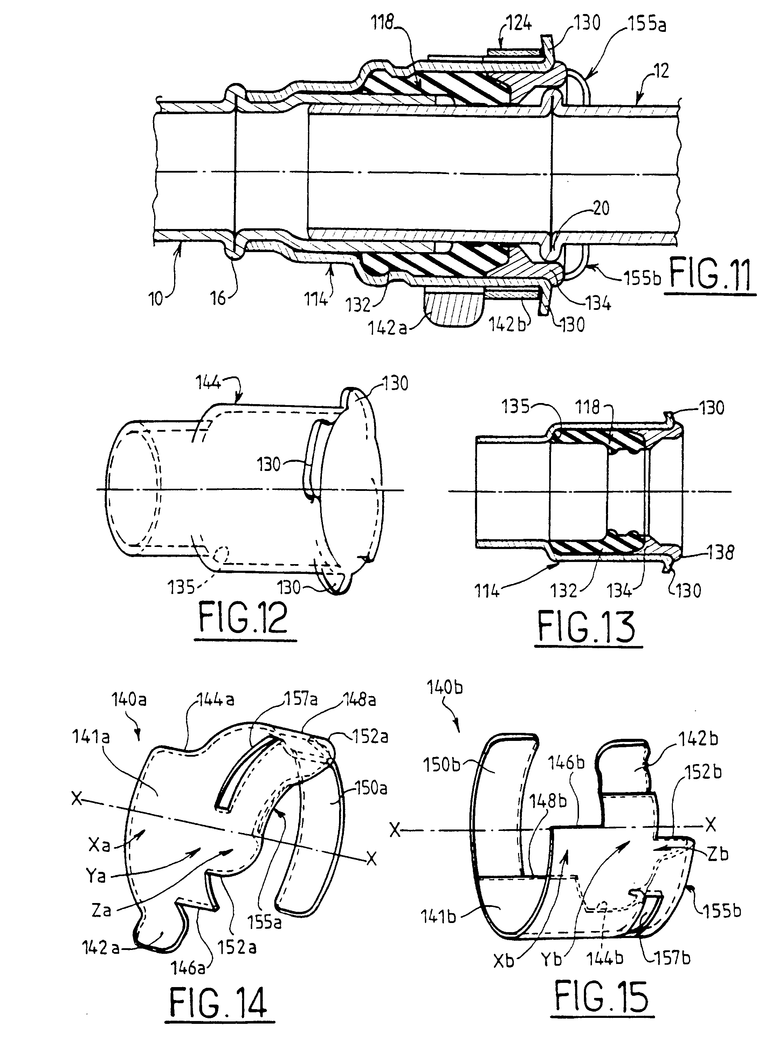

La douille métallique 114 est toujours de forme générale cylindrique et sertie sur l'extrémité du conduit 10, le bourrelet 16 du conduit 10 servant de butée d'appui et de positionnement de la douille 114 (figure 11).

Par contre, vers l'extrémité libre de la douille 114 qui s'étend au-delà de l'extrémité du conduit 10, on prévoit au moins une saillie 130 à la surface périphérique de la douille 114 et qui est destinée à coopérer avec l'organe de verrouillage 124, comme cela sera explicité plus loin. La douille 114 comporte quatre saillies 130 qui sont diamétralement opposées deux à deux (figure 12).

Le dispositif d'étanchéité 118 (figures 11 et 13) est constitué par un joint cylindrique 132 prolongé axialement à une extrémité par un insert cylindrique de protection 134. Le joint d'étanchéité 132 est avantageusement rendu solidaire de l'insert 134 pour ne former qu'une seule pièce. Cette liaison peut être assurée par collage ou par des moyens mécaniques d'accrochage ayant des formes complémentaires. Le joint d'étanchéité 132 est en un matériau élastomère, alors que l'insert de protection 134 peut être réalisé en métal ou en matière plastique. Le dispositif d'étanchéité 118 vient se loger dans la douille 114 en introduisant d'abord le joint d'étanchéité 132. La douille 114 présente une réduction de diamètre de manière à délimiter un épaulement annulaire interne 135 formant butée pour le joint d'étanchéité 132. L'extrémité libre de l'insert de protection 134 présente un rebord externe 138 a qui vient en appui sur la surface d'extrémité de la douille 114 lorsque le joint d'étanchéité 132 est en appui sur l'épaulement 135. La douille 114 est ensuite sertie sur le conduit 10, comme dans le premier mode de réalisation, avant le montage de l'embout 12.

Il est important de noter que le sertissage permet en une seule opération de fixer la douille 114 sur le conduit 10, d'immobiliser axialement le joint 132 et d'assurer l'étanchéité entre la douille 114 et le conduit 10.

L'organe de verrouillage 124 est constitué de deux pièces 140a et 140b qui sont illustrées sur les figures 14 et 15, respectivement.

La première pièce 140a est de forme globalement semi-cylindrique suivant un axe X-X et comprend une paroi courbe 141a qui peut se décomposer en trois zones :
- une zone transversale d'extrémité Xa qui s'étend entre une patte latérale 142a repliée vers l'extérieur et un côté longitudinal 144a,
- une zone transversale centrale Ya qui s'étend entre un côté longitudinal 146a et un côté longitudinal 148a, une languette courbe 150a prolongeant la zone centrale Ya à partir du milieu du côté longitudinal 148a, et
- une zone transversale d'extrémité Za qui s'étend entre deux côtés longitudinaux 152a.

L'extrémité libre de la zone d'extrémité transversale Za est repliée vers l'intérieur entre les deux côtés longitudinaux 152a pour former une patte d'encliquetage élastique 155a.

Une ouverture 157a est percée dans la paroi courbe 141a à un niveau situé entre sa zone centrale Ya et sa zone d'extrémité Za, cette ouverture 157a ayant une forme complémentaire de celle des saillies 130 de la douille 114. L'ouverture 157a de la première pièce 140a est située sensiblement à 90° par rapport à la patte latérale 142a, et la patte d'encliquetage élastique 155a est située sensiblement au même niveau que l'ouverture 157a.

Ainsi, l'ouverture 157a de l'organe de verrouillage 124 et une saillie 130 de la douille 114 forment des moyens d'assemblage ayant des formes complémentaires pour immobiliser l'organe de verrouillage 124 sur la douille 114.

La seconde pièce 140b de l'organe de verrouillage 124 a une forme globalement semblable à celle de la première pièce 140a, et les mêmes chiffres de référence ont été conservés en remplaçant a par b. Une différence cependant réside dans le fait que les positions de la patte latérale 142b et de la languette 150b sont inversées, c'est-à-dire :
- que la patte latérale de préhension 142b est située dans la zone transversale centrale Yb, et
- que la languette 150b est située dans la zone transversale Xb.

L'organe de verrouillage 124 est rapporté par déformation élastique autour de la douille 114.

La première pièce 140a est positionnée sur la douille 114 de manière à ce que l'une des quatre saillies 130 de la douille 114 vienne s'engager dans l'ouverture 157a de la première pièce 140a. De cette manière, la première pièce 140a est immobilisée axialement et en rotation.

La seconde pièce 140b est ensuite positionnée de manière à ce que la saillie 130 de la douille 114, qui est opposée à celle déjà engagée dans l'ouverture 157a de la première pièce 140a, vienne s'engager dans l'ouverture 157b de la seconde pièce 140b sachant, qu'à la suite de ce positionnement :
- les deux pièces 140a et 140b sont diamétralement opposées l'une à l'autre en entourant la douille 114,
- les deux pattes d'encliquetage élastique 155a et 155b délimitent entre elles deux encoches 158 diamétralement opposées dans lesquelles viennent s'engager les troisième et quatrième saillies 130 de la douille 114,
- les zones Xa, Ya et Za de la paroi 142a de la pièce 140a sont mutuellement en regard des zones Xb, Yb et Zb de la paroi 142b de la pièce 140b,
- les deux pattes latérales 142a et 142b sont sensiblement situées dans un même plan avec une fente 136 entre elles,
- la patte latérale 142a de la pièce 140a vient recouvrir le côté longitudinal 146b de la pièce 140b, et, inversement, la patte latérale 142b de la pièce 140b vient recouvrir le côté longitudinal 146a de la pièce 140a, et
- l'extrémité libre de la languette 150a de la pièce 140a vient en regard du côté longitudinal 144b de la pièce 140a et, inversement, l'extrémité libre de la languette 150b de la pièce 140b vient en regard du côté longitudinal 144a de la pièce 140a.

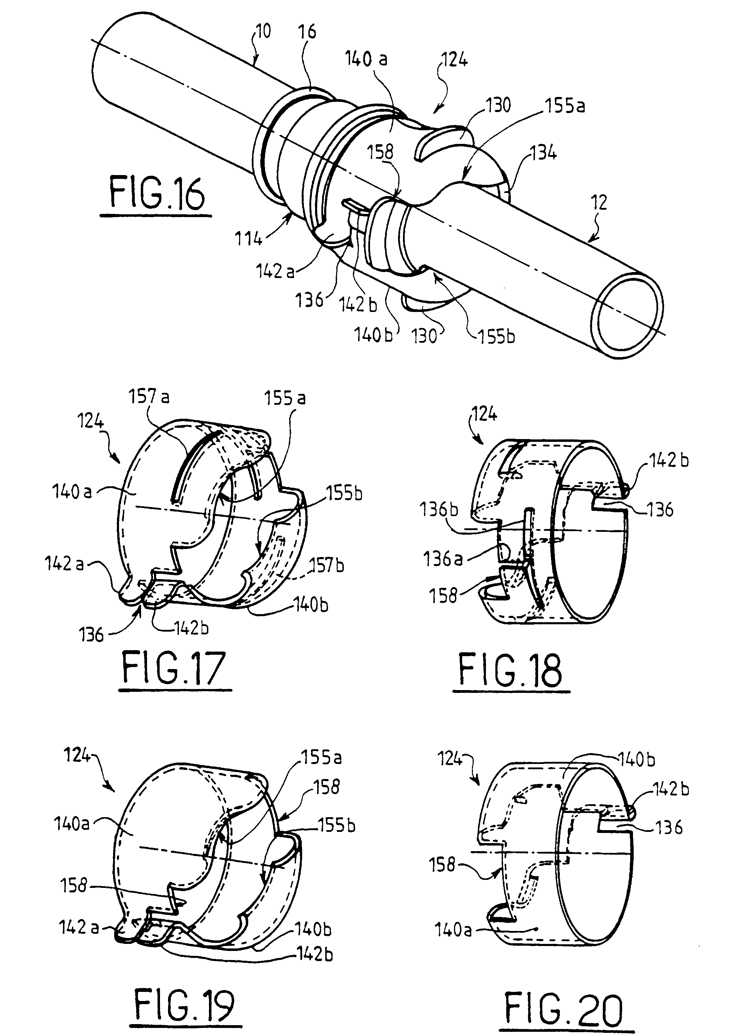

Une fois le raccord monté sur le conduit 10 l'embout 12 peut être engagé dans la douille 114 jusqu'à ce que les deux pattes 155a et 155b viennent s'engager par encliquetage élastique derrière le bourrelet périphérique 20 de l'embout 12, comme illustré sur les figures 11 et 16.

Suivant une variante de ce second mode de réalisation, l'organe de verrouillage 124 est constitué en une seule pièce comportant au moins une fente longitudinale pour permettre à l'organe de verrouillage 124 de se déformer élastiquement lors de son montage sur la douille 114 d'une part et lors de l'insertion de l'embout 12 d'autre part.

Un organe de verrouillage 124 en une seule pièce ayant une forme globalement cylindrique est illustré sur les figures 17 et 18. Par rappcrt aux figures 14 et 15, les deux parois 141a et 141b sont réunies l'une à l'autre en maintenant une fente longitudinale 136 au niveau des pattes latérales 142a et 142b. L'organe de verrouillage 124 comprend deux ouvertures transversales 157a et 157b diamétralement opposées dans lesquelles sont destinées à venir s'engager deux saillies 130 de la douille 114. Les deux ouvertures 157a et 157b sont sensiblement situées à 90° par rapport aux pattes latérales 142a et 142b, comme dans l'exemple illustré sur les figures 14 et 15. Vers une extrémité, l'organe de verrouillage 124 comprend également deux pattes d'encliquetage élastique 155a et 155b diamétralement opposées pour coopérer avec le bourrelet périphérique 20 de l'embout 12. Les deux pattes 155a et 155b sont sensiblement situées au même niveau que les ouvertures 157a et 157b. Du côté opposé aux pattes latérales 142a et 142b, on prévoit avantageusement au moins une fente longitudinale 136a qui débouche dans une fente transversale 136b pour augmenter l'élasticité de l'organe de verrouillage 124 (figure 18). La fente 136a est diamétralement opposée aux pattes latérales 142a et 142b, et reçoit avantageusement une saillie 130 de la douille 114 pour immobiliser l'organe de verrouillage 124 et faciliter son ouverture.

Dans le cas où la douille 114 comporte quatre saillies 130 régulièrement réparties autour de sa périphérie, deux saillies 130 diamétralement opposées sont destinées à s'engager dans les deux ouvertures 157a et 157b, une troisième saillie 130 est destinée à s'engager dans la fente 136, et la quatrième saillie 130 est destinée à s'engager dans une encoche 158 délimitée entre les deux pattes d'encliquetage élastiques 155a et 155b du côté opposé aux deux pattes latérales 142a et 142b.

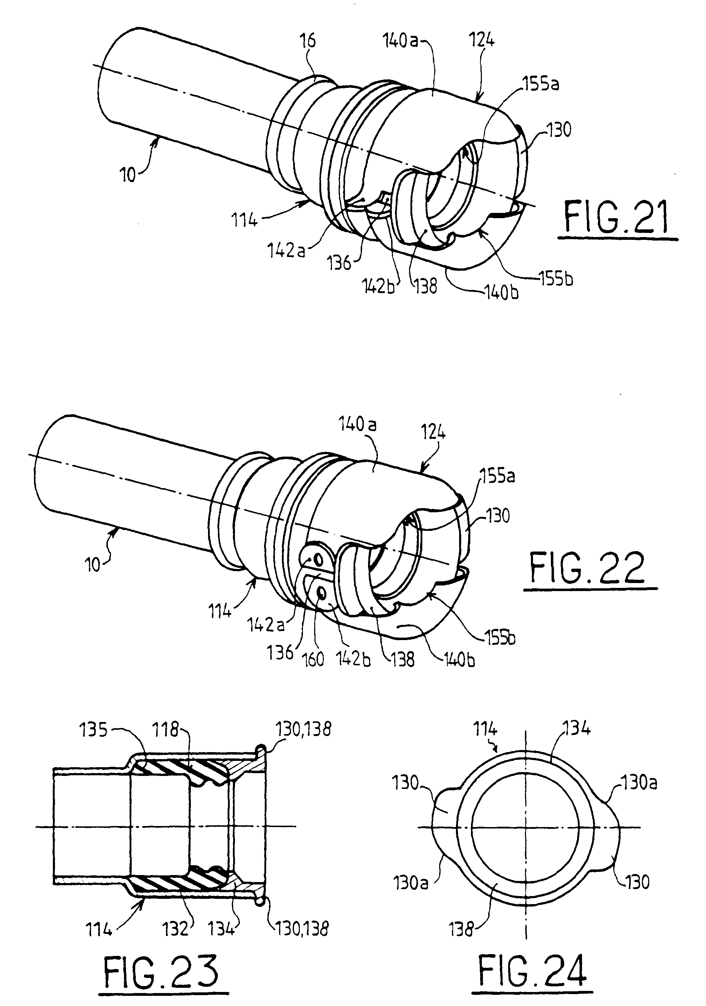

L'organe de verrouillage représenté sur les figures 19 et 20 est également réalisé en une seule pièce, mais il est destiné à coopérer avec une douille 114 ne présentant que deux saillies périphériques 130 diamétralement opposées. Dans ce cas, les parois 141a et 141b de l'organe de verrouillage 124 ne comportent pas les ouvertures 157a et 157b. En effet, les deux saillies 130 viennent se positionner entre les encoches 158 délimitées entre les deux pattes d'encliquetage élastique 155a et 155b, comme cela est représenté sur la figure 21.

Jusqu'à maintenant, les deux pactes de l'organe de verrouillage 124 sont destinées à être manipulées à la main en les écartant dans deux directions opposées pour déconnecter l'embout 12. A cet effet, ces pattes sont repliées sensiblement à 90° pour faciliter leur manipulation.

En variante, ces pattes peuvent être également manipulées au moyen d'un outil du type pince à circlips. Un exemple est représenté sur la figure 22, les deux pattes latérales 142a et 142b étant repliées à 180° avec un trou central 160 dans laquelle peut s'engager un bras de la pince.

A partir du second mode de réalisation décrit précédemment, on peut envisager des variantes de réalisation au niveau de certaines pièces du raccord.

Les saillies 130 prévues sur la douille 114 peuvent être réalisées au niveau de l'insert tubulaire 134 du dispositif d'étanchéité 118. Pour cela, il suffit d'aménager le rebord externe 138 de l'insert 134 de façon correspondante, comme cela est schématiquement représenté sur la figure 23.

D'une manière générale, les saillies 130 de la douille 114 ou l'insert 134 associé au joint 132 sont réalisées sous la forme d'un rebord qui présente deux côtés latéraux opposés formant un angle vif avec la surface périphérique de la douille 114. Un tel angle peut être aménagé en donnant à l'un des côtés latéraux de la saillie 130 la forme d'une rampe pour faciliter l'ouverture du raccord. Un exemple est représenté schématiquement sur la figure 24 dans le cas de la douille 114 avec deux saillies 130, sachant que les deux rampes 130a sont symétriques l'une de l'autre par rapport à un point situé sur l'axe de la douille 114.

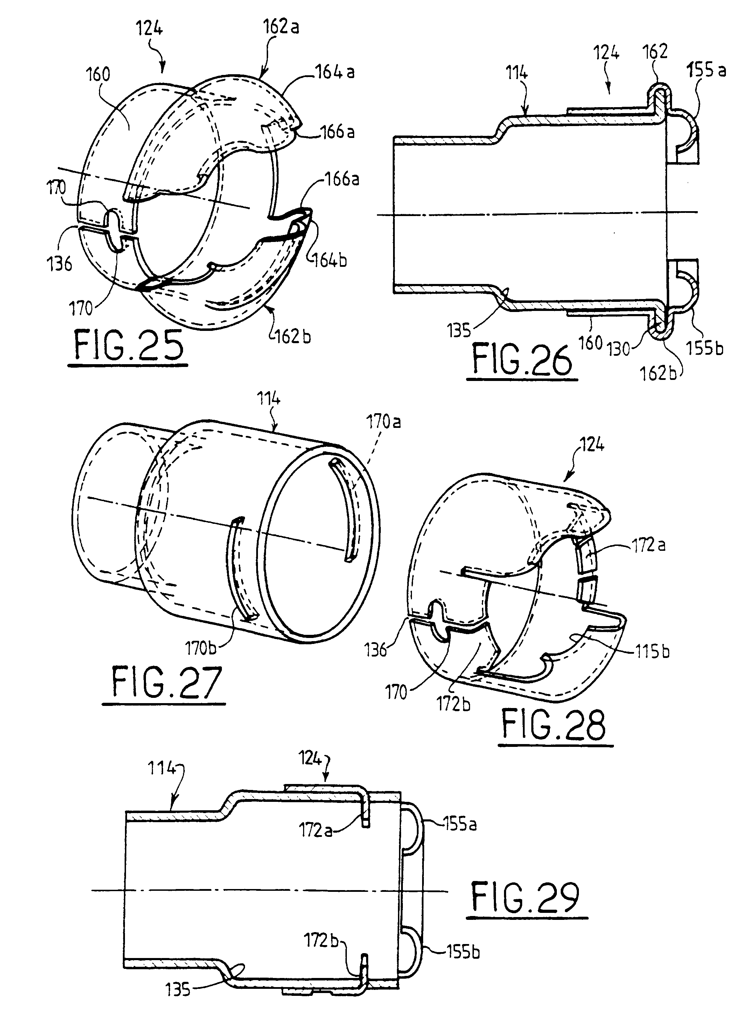

On a représenté sur les figures 25 et 26 une autre forme de réalisation en une seule pièce de l'organe de verrouillage 124 avec des moyens d'assemblage différents pour immobiliser l'organe de verrouillage 124 sur la douille 114.

L'organe de verrouillage 124 comprend une partie cylindrique 160 avec une fente longitudinale 136 pour lui permettre de se déformer élastiquement. La partie cylindrique se prolonge axialement et d'un côté par deux parties d'extrémité 162a, 162b diamétralement opposées.

Chaque partie d'extrémité 162a, 162b forme un bossage semi-circulaire 164a, 164b qui s'étend radialement vers l'extérieur en délimitant une gorge interne 166a, 166b semi-circulaire, puis est repliée vers l'intérieur pour former une patte d'encliquetage 155a, 155b comme dans les modes de réalisation précédents.

Au montage de l'organe de verrouillage 124 autour de la douille 114, la saillie 130 de la douille 114, qui est formée par une collerette à l'extrémité de celle-ci, vient se loger dans les gorges 166a, 166b de l'organe de verrouillage 124 pour immobiliser ce dernier.

On notera que les deux pattes 142a et 142b de l'organe de verrouillage 124 sont délimitées par deux encoches 170 situées de part et d'autre de la fente 136.

On a représenté sur les figures 27 à 29 encore une dernière forme de réalisation en une seule pièce de l'organe de verrouillage 124 avec des moyens d'assemblage ayant une structure inverse, c'est-à-dire que les saillies 130 sont prévues au niveau de l'organe de verrouillage 124 alors que des ouvertures correspondantes sont prévues dans la douille 114.

Plus précisément, la douille 114 présente par exemple deux ouvertures diamétralement opposées 170a, 170b (figure 27), et l'organe de verrouillage 124 présente des pattes 172a, 172b repliées vers l'intérieur et formées aux extrémités libres de l'organe de verrouillage 124 qui sont situées entre les deux pattes d'encliquetage 155a et 155b (figure 28) pour venir s'engager dans les ouvertures 170a, 170b de la douille 114 (figure 29).

## Revendications

1. Raccord encliquetable pour conduit de fluide, en particulier pour véhicule automobile, comprenant une douille cylindrique (14 ; 114) montée fixement sur une extrémité d'un conduit (10) à raccorder sur un embout tubulaire (12) qui est destiné à être introduit dans la douille (14 ; 114) et qui comporte une saillie périphérique (20) au voisinage de son extrémité libre, et un organe cylindrique de verrouillage (24 ; 124) rapporté autour de la douille (114) et destiné à coopérer avec une partie de la douille (114) et avec la saillie périphérique (20) de l'embout pour maintenir l'embout (12) engagé dans la douille (114), l'organe de verrouillage (24 ; 124) comprenant au moins une fente longitudinale (36 ; 136) et est formé avec deux pattes latérales (38 ; 142a, 142b) agencées respectivement d'un côté et l'autre de ladite fente (36 ; 136) pour permettre, par poussée sur les pattes (38 ; 142a, 142b) dans deux directions opposées, d'ouvrir l'organe de verrouillage (14 ; 124) pour la déconnexion du conduit (10) et de l'embout (12), **caractérisé en ce que** l'organe de verrouillage (24) comprend, à l'une de ses extrémités, une partie cylindrique dont le bord intérieur (34) est rabattu radialement vers l'axe de l'organe de verrouillage en au moins en deux points de sa périphérie pour former des pattes de verrouillage.

2. Dispositif selon la revendication 1, **caractérisé en ce que** les pattes latérales (38) sont formées au voisinage d'une extrémité de l'organe de verrouillage (24 ; 124).

3. Dispositif selon la revendication 1 ou 2, **caractérisé en ce que** les pattes latérales (38) sont voisines l'une de l'autre.

4. Dispositif selon l'une des revendications précédentes, **caractérisé en ce que** l'organe de verrouillage (24 ; 124) est en une seule pièce.

5. Dispositif selon l'une des revendication 1 à 3, **caractérisé en ce que** l'organe de verrouillage (24) est formé de deux pièces (42, 52) semi-cylindriques, fixées l'une à l'autre et/ou sur la douille (14) précitée par serrage élastique ou par encliquetage.

6. Dispositif selon la revendication 5, **caractérisé en ce que** les deux pièces semi-cylindriques (42, 52) sont identiques l'une à l'autre.

7. Dispositif selon la revendication 6, **caractérisé en ce que** chaque pièce semi-cylindrique (52) comprend deux pattes (54, 56) de montage élastique sur la douille (14) ou l'embout (12) et sur l'autre pièce semi-cylindrique (52) respectivement.

8. Dispositif selon l'une des revendications précédentes, **caractérisé en ce que** l'organe de verrouillage est monté dans une douille (14) et coopère par encliquetage élastique avec la saillie radiale (20) de l'embout (12).

9. Dispositif selon l'une des revendications précédentes, **caractérisé en ce que** l'organe de verrouillage (24) est en matière plastique ou en métal.

10. Dispositif selon l'une quelconque des revendications 1 à 3, **caractérisé en ce que** la partie de la douille (114) qui coopère avec l'organe de verrouillage (124) est constituée par des moyens d'assemblage ayant des formes complémentaires pour immobiliser l'organe de verrouillage (124) sur la douille (114).

11. Dispositif selon la revendication 10,**caractérisé en ce que** les moyens d'assemblage comprennent au moins une saillie (130) vers l'extrémité libre de la douille (114), et **en ce que** l'organe de verrouillage (124) comprend au moins une ouverture (157a) ou une encoche (158) dans laquelle vient s'engager la saillie (130) de la douille.

12. Dispositif selon la revendication 11, **caractérisé en ce que** l'organe de verrouillage (124) comprend deux pièces (124a, 124b) rapportées autour de la douille (114), chaque pièce (124a, 124b) comprenant au moins une ouverture (157a, 157b) dans laquelle est destinée à s'engager une saillie périphérique (130) de la douille (114).

13. Dispositif selon la revendication 12, **caractérisé en ce que** les deux pièces (124a, 124b) de l'organe de verrouillage (124) comprennent chacune une patte d'accrochage (155a, 155b) destinée à s'encliqueter élastiquement sur la saillie périphérique (20) de l'embout (12), les deux pattes d'accrochage (155a, 155b) étant diamétralement opposées.

14. Dispositif selon la revendication 11, **caractérisé en ce que** l'organe de verrouillage (124) est formé d'une seule pièce ayant une forme globalement cylindrique et présentant une fente longitudinale (136) avec deux pattes latérales (142a, 142b) de part et d'autre de la fente (136), et comprend vers une extrémité deux pattes d'accrochage (155a, 155b) diamétralement opposées et destinées à s'encliqueter élastiquement sur la saillie périphérique (20) de l'embout (12).

15. Dispositif selon la revendication 14, **caractérisé en ce que** l'organe de verrouillage (124) comprend au moins une ouverture (157a, 157b) dans laquelle est destinée à s'engager une saillie périphérique (130) de la douille (114).

16. Dispositif selon la revendication 15, **caractérisé en ce que** la douille (114) présente quatre saillies (130) régulièrement réparties autour de sa périphérie, **en ce que** l'organe de verrouillage (124) comprend deux ouvertures (157a, 157b) diamétralement opposées dans lesquelles viennent s'engager deux saillies périphériques (130), et **en ce que** les deux pattes d'accrochage (155a, 155b) délimitent entre elles deux encoches (158) dans lesquelles viennent s'engager les deux autres saillies périphériques (130) de la douille (114).

17. Dispositif selon la revendication 15, **caractérisé en ce que** la douille (114) présente quatre saillies (130) régulièrement réparties à sa périphérie, **en ce que** l'organe de verrouillage (124) comprend deux ouvertures (157a, 157b) diamétralement opposées dans lesquelles viennent s'engager deux saillies périphériques (130), une troisième ouverture (136a) dans laquelle vient s'engager une troisième saillie périphérique (130), et **en ce que** les deux pattes d'accrochage (155a, 155b) délimitent entre elles une encoche (158) dans laquelle vient s'engager la quatrième saillie périphérique (130) de la douille (114).

18. Dispositif selon la revendication 15, **caractérisé en ce que** la douille (114) présente deux saillies (130) diamétralement opposées, et **en ce que** les deux pattes d'accrochage (155a, 155b) délimitent entre elles deux encoches (158) diamétralement opposées dans lesquelles s'engagent les deux saillies (130) de la douille (114).

19. Dispositif selon la revendication 14, **caractérisé en ce que** l'organe de verrouillage (124) comprend une partie cylindrique (160) avec une fente longitudinale (136), **en ce que** la partie cylindrique (160) se prolonge axialement et d'un côté par deux parties d'extrémité (162a, 162b) diamétralement opposées, **en ce que** chaque partie d'extrémité (162a, 162b) forme un bossage semi-circulaire (164a, 164b) qui s'étend radialement vers l'extérieur en délimitant une gorge interne (166a, 166b) semi-circulaire et est repliée vers l'intérieur pour former une patte d'encliquetage (155a, 155b), et **en ce que** la douille (114) comporte une saillie (130) sous la forme d'une collerette destinée à venir s'engager dans lesdites gorges (166a, 166b).

20. Dispositif selon la revendication 10, **caractérisé en ce que** les moyens d'assemblage comprennent au moins une saillie (172a, 172b) formée par une patte repliée vers l'intérieur au niveau de l'organe de verrouillage (124), et au moins une ouverture (170a, 170b) au niveau de la douille (114).

21. Dispositif selon l'une quelconque des revendications 10 à 20, **caractérisé en ce qu'**il comprend un dispositif d'étanchéité (118) logé à l'intérieur de la douille (114), ce dispositif (118) comprenant au moins un joint d'étanchéité cylindrique (132) fixé par sertissage sur le conduit (10).

22. Dispositif selon la revendication 21, **caractérisé en ce que** le joint d'étanchéité (132) est prolongé axialement par un insert cylindrique de protection (134).

## Claims

1. A snap-fastenable coupling for a fluid duct, in particular for a motor vehicle, the coupling comprising a cylindrical bushing (14, 114) secured to one end of a duct (10) for coupling to a tubular endpiece (12) which is designed to be inserted into the bushing (14, 114) and which has a peripheral projection (20) in the vicinity of its free end, and a cylindrical locking member (24; 124) fitted around the bushing (114) and designed to co-operate with a portion of the bushing (114) and with the peripheral projection (20) on the endpiece to hold the endpiece (12) engaged in the bushing (114), the locking member (24; 124) having at least one longitudinal slot (36; 136) and is formed with two side tabs (38; 142a, 142b) organized on respective opposite sides of said slot (36; 136) to enable the locking member (14; 124) to be opened for disconnection of the duct (10) from the endpiece (12) by applying thrust in two opposite directions on the tabs (38; 142a, 142b), the coupling being **characterized in that** the locking member (24) comprises, at one of its ends, a cylindrical portion whose inside edge (34) extends radially towards the axis of the locking member at least at two points on its periphery, to form locking tabs.

2. A device according to claim 1, **characterized in that** the side tabs (38) are formed in the vicinity of one end of the locking member (24; 124).

3. A device according to claim 1 or 2, **characterized in that** the side tabs (38) are adjacent to each other.

4. A device according to any preceding claim, **characterized in that** the locking member (24; 124) is in a single piece.

5. A device according to any one of claims 1 to 3, **characterized in that** the locking member (24) is made of two semicylindrical pieces (42, 52) fixed to each other and/or onto the above-specified bushing (14) by elastic clamping or by snap-fastening.

6. A device according to claim 5, **characterized in that** the two semicylindrical pieces (42, 52) are identical to each other.

7. A device according to claim 6, **characterized in that** each semicylindrical piece (52) has two tabs (54, 56) for resiliently mounting on the bushing (14) or the endpiece (12) and on the other semicylindrical piece (52), respectively.

8. A device according to any preceding claim, **characterized in that** the locking member is mounted on the bushing (14) and co-operates by resilient snap-fastening with the radial projection (20) of the endpiece (12).

9. A device according to any preceding claim, **characterized in that** the locking member (24) is made of plastics material or of metal.

10. A device according to any one of claims 1 to 3, **characterized in that** the portion of the bushing (114) which co-operates with the locking member (124) is constituted by assembly means of complementary shapes to hold the locking member (124) on the bushing (114).

11. A device according to claim 10, **characterized in that** the assembly means comprise at least one projection (130) towards the free end of the bushing (114), and **in that** the locking member (124) has at least one opening (157a) or notch (158) into which the projection (130) of the bushing is engaged.

12. A device according to claim 11, **characterized in that** the locking member (124) comprises two pieces (124a, 124b) fitted around the bushing (114), each piece (124a, 124b) having at least one opening (157a, 157b) in which a peripheral projection (130) of the bushing (114) is to be engaged.

13. A device according to claim 12, **characterized in that** each of the two pieces (124a, 124b) of the locking member (124) comprises a snap-fastening tab (155a, 155b) designed to snap-fasten resiliently on the peripheral projection (20) of the endpiece (12), the two snap-fastening tabs (155a, 155b) being diametrically opposite.

14. A device according to claim 11, **characterized in that** the locking member (124) is formed as a single piece that is generally cylindrical in shape and has a longitudinal slot (136) with two side tabs (142a, 142b) on either side of the slot (136), and towards one end has two diametrically-opposite snap-fastening tabs (155a, 155b) designed to snap-fasten resiliently on the peripheral projection (20) of the endpiece (12).

15. A device according to claim 14, **characterized in that** the locking member (124) has at least one opening (157a, 157b) in which a peripheral projection (130) of the bushing (114) is to be engaged.

16. A device according to claim 15, **characterized in that** the bushing (114) has four projections (130) regularly distributed around its periphery, **in that** the locking member (124) has two diametrically-opposite openings (157a, 157b) in which two peripheral projections (130) are engaged, and **in that** the two snap-fastening tabs (155a, 155b) define between them two notches (158) in which the other two peripheral projections (130) of the bushing (114) are engaged.

17. A device according to claim 15, **characterized in that** the bushing (114) has four projections (130) regularly spaced apart on its periphery, **in that** the locking member (124) has two diametrically-opposite openings (157a, 157b) in which two peripheral projections (130) are engaged, a third opening (136a) in which a third peripheral projection (130) is engaged, and **in that** the two snap-fastening tabs (155a, 155b) define between them a notch (158) in which the fourth peripheral projection (130) of the bushing (114) is engaged.

18. A device according to claim 15, **characterized in that** the bushing (114) has two diametrically-opposite projections (130), and **in that** the two snap-fastening tabs (155a, 155b) define between them two diametrically-opposite notches (158) in which the two projections (130) of the bushing (114) are engaged.

19. A device according to claim 14, **characterized in that** the locking member (124) comprises a cylindrical portion (160) with a longitudinal slot (136), **in that** the cylindrical portion (160) extends axially and from one side in the form of two diametrically-opposite end portions (162a, 162b), **in that** each end portion (162a, 162b) forms a semicircular bead (164a, 164b) which extends radially outwards defining a semicircular internal groove (166a, 166b) and is folded inwards to form a snap-fastening tab (155a, 155b), and **in that** the bushing (114) has a projection (130) in the form of a collar designed to engage in said grooves (166a, 166b).

20. A device according to claim 10, **characterized in that** the assembly means comprise at least one projection (172a, 172b) formed by an inwardly-folded tab of the locking member (124) and at least one opening (170a, 170b) of the bushing (114).

21. A device according to any one of claims 10 to 20, **characterized in that** it comprises a sealing device (118) housed inside the bushing (114), said device (118) comprising at least one cylindrical sealing gasket (132) fixed on the duct (10) by crimping.

22. A device according to claim 21, **characterized in that** the sealing gasket (132) is extended axially by a cylindrical protection insert (134).

## Patentansprüche

1. Einrastbare Verbindung für Flüssigkeitsleitungen, im Speziellen für ein Kraftfahrzeug, umfassend eine zylindrische Hülse (14; 114), welche fest an einem Ende einer Leitung (10) zum Befestigen an einem röhrenförmigen Ansatzstück (12) angebracht ist, welches dazu bestimmt ist, in die Hülse (14; 114) eingeführt zu werden, und welches benachbart zu seinem freien Ende eine Umfangsausbeulung (20) und eine um die Hülse (114) herum zusammengesetzte zylindrische Verriegelungseinrichtung (24; 124), welche dazu bestimmt ist, mit einem Teil der Hülse (114) und mit der Umfangsausbeulung (20) des Ansatzstücks (12) zusammenzuwirken, um das Ansatzstück (12) in Eingriff in der Hülse (114) zu halten, umfasst, wobei die Verriegelungseinrichtung (24; 124) zumindest einen longitudinalen Schlitz (36; 136) umfasst und mit zwei lateralen Krallen (38; 142a, 142b) ausgebildet ist, welche an der einen bzw. der anderen Seite des Schlitzes (36; 136) konstruiert sind, um für das Lösen der Leitung (10) und des Ansatzstücks (12) voneinander durch Drücken in zwei entgegengesetzte Richtungen auf die Krallen (38; 142a, 142b) ein Öffnen der Verriegelungseinrichtung (14; 124) zu ermöglichen, **dadurch gekennzeichnet, dass** die Verriegelungseinrichtung (24) an einem ihrer Enden einen zylindrischen Teil umfasst, dessen innerer Rand (34) in zumindest zwei Punkten seines Umfangs radial zu der Achse der Verriegelungseinrichtung hin umgeschlagen ist, um Verriegelungskrallen zu bilden.

2. Vorrichtung gemäß Anspruch 1, **dadurch gekennzeichnet, dass** die lateralen Krallen (38) benachbart zu einem Ende der Verriegelungseinrichtung (24; 124) ausgebildet sind.

3. Vorrichtung gemäß Anspruch 1 oder 2, **dadurch gekennzeichnet, dass** die lateralen Krallen (38) zueinander benachbart sind.

4. Vorrichtung gemäß einem der vorhergehenden Ansprüche, **dadurch gekennzeichnet, dass** die Verriegelungseinrichtung (24; 124) aus einem einzigen Teil ist.

5. Vorrichtung gemäß einem der Ansprüche 1 bis 3, **dadurch gekennzeichnet, dass** die Verriegelungseinrichtung (24) aus zwei halbzylindrischen Teilen (42, 52) gebildet ist, welche aneinander und/oder an der zuvor genannten Hülse (14) durch elastische Klemmung oder durch Einrasten befestigt sind.

6. Vorrichtung gemäß Anspruch 5, **dadurch gekennzeichnet, dass** die zwei halbzylindrischen Teile (42, 52) identisch sind.

7. Vorrichtung gemäß Anspruch 6, **dadurch gekennzeichnet, dass** jedes halbzylindrische Teil (52) zwei Krallen (54, 56) zur elastischen Anbringung an der Hülse (14) oder dem Ansatzstück (12) bzw. an dem anderen halbzylindrischen Teil (52) umfasst.

8. Vorrichtung gemäß einem der vorhergehenden Ansprüche, **dadurch gekennzeichnet, dass** die Verriegelungseinrichtung in einer Hülse (14) angebracht ist, und zum elastischen Einrasten mit der Umfangsausbeulung (20) des Ansatzstücks (12) zusammenwirkt.

9. Vorrichtung gemäß einem der vorhergehenden Ansprüche, **dadurch gekennzeichnet, dass** die Verriegelungseinrichtung (24) aus Kunststoffmaterial oder aus Metall ist.

10. Vorrichtung gemäß einem beliebigen der Ansprüche 1 bis 3, **dadurch gekennzeichnet, dass** der Teil der Hülse (114), welcher mit der Verriegelungseinrichtung (124) zusammenwirkt, durch Aufbaumittel zusammengesetzt ist, welche komplementäre Formen aufweisen, um die Verriegelungseinrichtung (124) an der Hülse (114) zu festzusetzen.

11. Vorrichtung gemäß Anspruch 10, **dadurch gekennzeichnet, dass** die Aufbaumittel zumindest eine Ausbeulung (130) in Richtung eines freien Endes der Hülse (114) umfassen, und dass die Verriegelungseinrichtung (124) zumindest eine Öffnung (157a) oder eine Kerbe (158) umfasst, in welcher die Ausbeulung (130) der Hülse zum Eingriff kommt.

12. Vorrichtung gemäß Anspruch 11, **dadurch gekennzeichnet, dass** die Verriegelungseinrichtung (124) zwei Teile (124a, 124b) umfasst, welche um die Hülse (114) herum zusammengesetzt sind, wobei jedes Teil (124a, 124b) zumindest eine Öffnung (157a, 157b) umfasst, in welcher eine Umfangsausbeulung (130) der Hülse (114) bestimmt ist, sich in Eingriff zu befinden.

13. Vorrichtung gemäß Anspruch 12, **dadurch gekennzeichnet, dass** die zwei Teile (124a, 124b) der Verriegelungseinrichtung (124) jeweils eine Verhakungskralle (155a, 155b) umfassen, welche dazu bestimmt ist, elastisch an der Umfangsausbeulung (20) des Ansatzstücks (12) einzurasten, wobei die zwei Verhakungskrallen (155a, 155b) einander diametral gegenüberliegen.

14. Vorrichtung gemäß Anspruch 11, **dadurch gekennzeichnet, dass** die Verriegelungseinrichtung (124) aus einem einzigen Teil gebildet ist, welches eine im Allgemeinen zylindrische Form hat, einen longitudinalen Schlitz (136) mit zwei lateralen Krallen (142a, 142b) auf der einen und der anderen Seite des Schlitzes (136) aufweist und in Richtung eines Endes zwei Verhakungskrallen (155a, 155b), welche einander diametral gegenüber liegen und dazu bestimmt sind, elastisch an der Umfangsausbeulung (20) des Ansatzstücks (12) einzurasten, umfasst.

15. Vorrichtung gemäß Anspruch 14, **dadurch gekennzeichnet, dass** die Verriegelungseinrichtung (124) zumindest eine Öffnung (157a, 157b) umfasst, in welcher eine Umfangsausbeulung (130) der Hülse (114) bestimmt ist, zum Eingriff zu kommen.

16. Vorrichtung gemäß Anspruch 15, **dadurch gekennzeichnet, dass** die Hülse (114) vier Ausbeulungen (130) aufweist, welche regelmäßig auf ihrem Umfang verteilt sind, dass die Verriegelungseinrichtung (124) zwei diametral gegenüberliegende Öffnungen (157a, 157b) umfasst, in welchen zwei Umfangsausbeulungen (130) zum Eingriff kommen, und dass die zwei Verhakungskrallen (155a, 155b) zwischen sich zwei Kerben (158) begrenzen, in welchen die zwei anderen Umfangsausbeulungen (130) der Hülse (114) zum Eingriff kommen.

17. Vorrichtung gemäß Anspruch 15, **dadurch gekennzeichnet, dass** die Hülse (114) vier Ausbeulungen (130) aufweist, welche regelmäßig auf ihrem Umfang verteilt sind, dass die Verriegelungseinrichtung (124) zwei diametral gegenüberliegende Öffnungen (157a, 157b), in welchen zwei Umfangsausbeulungen (130) zum Eingriff kommen, und eine dritte Öffnung (136a), in welcher eine dritte Umfangsausbeulung (130) zum Eingriff kommt, umfasst, und dass die zwei Verhakungskrallen (155a, 155b) zwischen sich eine Kerbe (158) begrenzen, in welcher die vierte Umfangsausbeulung (130) der Hülse (114) zum Eingriff kommt.

18. Vorrichtung gemäß Anspruch 15, **dadurch gekennzeichnet, dass** die Hülse (114) zwei diametral gegenüberliegende Ausbeulungen (130) aufweist, und dass die zwei Verhakungskrallen (155a, 155b) zwischen sich zwei diametral gegenüberliegende Kerben (158) begrenzen, in welchen sich die zwei Ausbeulungen (130) der Hülse (114) in Eingriff befinden.

19. Vorrichtung gemäß Anspruch 14, **dadurch gekennzeichnet, dass** die Verriegelungseinrichtung (124) einen zylindrischen Teil (160) mit einem longitudinalen Schlitz (136) umfasst, dass der zylindrische Teil (160) sich axial und auf einer Seite zwischen zwei diametral gegenüberliegenden Endteilen (162a, 162b) fortsetzt, dass jeder Endteil (162a, 162b) einen halbkreisförmigen Wulst (164a, 164b) bildet, welcher sich radial nach außen erstreckt, eine halbkreisförmige innere Kehle (166a, 166b) begrenzt und nach innen umgefaltet ist, um eine Einrastkralle (155a, 155b) zu bilden, und dass die Hülse (114) eine Ausbeulung (130) in Form eines Kragens umfasst, welche dazu bestimmt ist, in den Kehlen (166a, 166b) zum Eingriff zu kommen.

20. Vorrichtung gemäß Anspruch 10, **dadurch gekennzeichnet, dass** die Aufbaumittel zumindest eine Ausbeulung (172a, 172b), welche durch eine nach innen gefaltete Kralle auf Höhe der Verriegelungsvorrichtung (124) gebildet ist, und zumindest eine Öffnung (170a, 170b) auf Höhe der Hülse (114) umfassen.

21. Vorrichtung gemäß einem der Ansprüche 10 bis 20, **dadurch gekennzeichnet, dass** sie eine im Inneren der Hülse (114) untergebrachte Abdichtungsvorrichtung (118) umfasst, wobei diese Vorrichtung (118) zumindest eine zylindrische Dichtung (132) umfasst, welche durch eine Quetschverbindung auf der Leitung (10) befestigt ist.

22. Vorrichtung gemäß Anspruch 21, **dadurch gekennzeichnet, dass** die Dichtung (132) axial durch einen zylindrischen Schutzeinsatz (134) fortgesetzt ist.
